# EUROPEAN PATENT APPLICATION

(11) **EP 4 822 402 A1**
(43) Date of publication of application: **14.10.2026**
(21) Application number: 26168852.7
(22) Date of filing: 30.03.2026
(51) Int. Cl.: G01S 19/28, G01S 19/32, G01S 19/33, G01S 19/07

(54) **GNSS SIGNAL TRACKING SELECTION FOR IMPROVED PROCESSOR UTILIZATION**

(30) Priority: 11.04.2025 US 202519176537
(71) Applicant: Trimble Inc, Westminster CO 80021 (US)
(72) Inventor: TALEGHANI, Leila, Westminster, 80021 (US); RILEY, Stuart, Westminster, 80021 (US)
(74) Representative: AWA Sweden AB

(57) **Abstract**

Described herein are systems, methods, and other techniques for selecting satellite signals for tracking at a GNSS receiver. A set of satellite signals are received via a GNSS antenna. Each of the set of satellite signals belongs to one of at least one GNSS constellation, operates within one of a set of frequency bands, and has one of a set of signal types. A correction signal is received at the GNSS receiver from a base station. The correction signal includes correction data for a subset of the set of satellite signals. While operating in accordance with a signal selection mode, the subset of the set of satellite signals are selected to be included in a set of active signals to be tracked by the GNSS receiver. Each satellite signal in the set of active signals is tracked using hardware elements of the GNSS receiver.

## Description

### BACKGROUND OF THE INVENTION

Global navigation satellite systems (GNSS) are systems that use medium Earth orbit (MEO) or geosynchronous orbit (GEO) satellites to provide geospatial positioning of receiving devices. Typically, wireless signals transmitted from such satellites can be used by GNSS receivers to determine their position, velocity, and time. Examples of currently operational GNSSs include the United States' Global Positioning System (GPS), Russia's Global Navigation Satellite System (GLONASS), China's BeiDou Satellite Navigation System, the European Union's (EU) Galileo, Japan's Quasi-Zenith Satellite System (QZSS), and the Indian Navigation with Indian Constellation (NavIC). Today, GNSS receivers are used in a wide range of applications, including navigation (e.g., for automobiles, planes, boats, persons, animals, freight, military precision-guided munitions, etc.), surveying, mapping, and time referencing.

The accuracy of GNSS receivers has improved drastically over the past few decades due to several technological improvements. One such improvement is the use of differential measurement techniques, in which GNSS signals received by a fixed receiver are used to generate correction data that is communicated to a mobile receiver. Typically, a roving receiver (or simply "rover") receives the correction data from a reference source or base station that already knows its exact location, in addition to receiving signals from GNSS satellites. To generate the correction data, the base station first tracks all the satellites in view and measures their pseudoranges. Next, the base station computes its position and compares the computed position to its known position to generate a list of corrections needed to make the measured pseudorange values accurate for all visible satellites. The correction data is then communicated to the rover, which applies these corrections to its computed pseudoranges to produce a more accurate position. This technique may be referred to as differential GNSS.

Another improvement to GNSS accuracy came through the use of real-time kinematic (RTK) measurement techniques, in which the rover determines its position relative to a base station by comparing the phases of carrier waves received at the rover with those measured at the base station. Multiple satellite signals transmitted by GNSS satellites are used to measure these carrier phases. Once the rover receives a set of carrier phases from the base station, it compares them with its own set of carrier phases. This comparison allows the rover to calculate a vector between itself and the base station. With the known coordinates of the base station, which can be communicated to the rover by the base station, the rover can compute its precise location within a specific coordinate frame. The carrier signal used in RTK has a shorter wavelength than the width of a PRN code, enabling more accurate distance measurement. RTK enables fast and centimeter-level positioning anywhere within a large area.

Precise point positioning (PPP) is a positioning technology developed to not rely on corrections received from a reference station but rather to use globally derived corrections through data collected by a global network of reference stations. These corrections may be disseminated to users via the internet, satellite, or communication channels. One propriety solution is real-time extended (RTX), developed by Trimble, which relies on a network of reference stations strategically located around the world. These reference stations continuously collect precise GNSS data and monitor satellite signals. The data collected by the reference stations is sent to a centralized processing center, which uses advanced algorithms and models to compute highly accurate corrections for satellite orbits, clock errors, and atmospheric conditions. A rover can receive these corrections and use them to enhance its position calculation in real-time by accounting for systematic errors and distortions present in the satellite signals.

### SUMMARY OF THE INVENTION

A summary of the various embodiments of the invention is provided below as a list of examples. As used below, any reference to a series of examples is to be understood as a reference to each of those examples disjunctively (e.g., "Examples 1-4" is to be understood as "Examples 1, 2, 3, or 4").

Example 1 is a method of comprising: receiving a set of satellite signals at a global navigation satellite system (GNSS) receiver, the set of satellite signals having been transmitted by a set of satellites, the set of satellite signals being received via a GNSS antenna of the GNSS receiver, wherein each of the set of satellite signals (i) belongs to one of at least one GNSS constellation, (ii) operates within one of a set of frequency bands, and (iii) has one of a set of signal types; receiving a correction signal at the GNSS receiver from a base station, the correction signal including correction data for a subset of the set of satellite signals; while operating in accordance with a signal selection mode, selecting the subset of the set of satellite signals to be included in a set of active signals to be tracked by the GNSS receiver; and tracking each satellite signal in the set of active signals using hardware elements of the GNSS receiver, the hardware elements including a processor.

Example 2 is the method of example(s) 1, further comprising: while operating in accordance with the signal selection mode, selecting each satellite signal from the set of satellite signals not in the set of active signals to be included in a set of inactive signals that are not to be tracked by the GNSS receiver; and configuring the hardware elements to not track the set of inactive signals.

Example 3 is the method of example(s) 1-2, wherein the at least one GNSS constellation includes at least one of Global Positioning System (GPS), Global Navigation Satellite System (GLONASS), BeiDou, Galileo, Quasi-Zenith Satellite System (QZSS), or Navigation with Indian Constellation (NavIC).

Example 4 is the method of example(s) 3, wherein the set of frequency bands include at least one of GPS L1, GPS L2, GPS L5, GLONASS G1, GLONASS G2, GLONASS G3, Galileo E1, Galileo E5, or Galileo E6.

Example 5 is the method of example(s) 4, wherein the set of signal types include at least one of GPS L1 C/A, GPS L1C, GPS L1E, GPS L2C, GPS L2E, GPS L5, GLONASS G1 C/A, GLONASS G1P, GLONASS G2 C/A, GLONASS G2P, GLONASS G3, Galileo E1, Galileo E5 AltBoc, Galileo E5A, Galileo E5B, or Galileo E6.

Example 6 is the method of example(s) 1-5, wherein the signal selection mode is a first signal selection mode, and wherein the method further comprises: switching from the first signal selection mode to a second signal selection mode; while operating in accordance with the second signal selection mode, selecting one satellite signal per satellite in the subset of the set of satellite signals to be included in the set of active signals to be tracked by the GNSS receiver; and tracking each satellite signal in the set of active signals using hardware elements of the GNSS receiver.

Example 7 is the method of example(s) 6, wherein the signal selection mode is a first signal selection mode, and wherein the method further comprises: while operating in accordance with the second signal selection mode, selecting each satellite signal from the set of satellite signals not in the set of active signals to be included in a set of inactive signals that are not to be tracked by the GNSS receiver; and configuring the hardware elements to not track the set of inactive signals.

Example 8 is the method of example(s) 1, wherein the signal selection mode is a first signal selection mode, and wherein the method further comprises: switching from the first signal selection mode to a second signal selection mode; while operating in accordance with the second signal selection mode, selecting one satellite signal per frequency band in the subset of the set of satellite signals to be included in the set of active signals to be tracked by the GNSS receiver; and tracking each satellite signal in the set of active signals using hardware elements of the GNSS receiver.

Example 9 is the method of example(s) 6, wherein the signal selection mode is a first signal selection mode, and wherein the method further comprises: while operating in accordance with the second signal selection mode, selecting each satellite signal from the set of satellite signals not in the set of active signals to be included in a set of inactive signals that are not to be tracked by the GNSS receiver; and configuring the hardware elements to not track the set of inactive signals.

Example 10 is the method of example(s) 1-9, wherein the signal selection mode is a first signal selection mode, and wherein the method further comprises: determining a utilization level of the processor; comparing the utilization level of the processor to a threshold; and in response to determining that the utilization level of the processor is greater than the threshold, switching from the first signal selection mode to a second signal selection mode different from the first signal selection mode.

Example 11 is a non-transitory computer-readable medium comprising instructions that, when executed by one or more processors, cause the one or more processors to perform operations comprising: causing a set of satellite signals to be received at a global navigation satellite system (GNSS) receiver, the set of satellite signals having been transmitted by a set of satellites, the set of satellite signals being received via a GNSS antenna of the GNSS receiver, wherein each of the set of satellite signals (i) belongs to one of at least one GNSS constellation, (ii) operates within one of a set of frequency bands, and (iii) has one of a set of signal types; causing a correction signal to be received at the GNSS receiver from a base station, the correction signal including correction data for a subset of the set of satellite signals; while operating in accordance with a signal selection mode, selecting the subset of the set of satellite signals to be included in a set of active signals to be tracked by the GNSS receiver; and tracking each satellite signal in the set of active signals using hardware elements of the GNSS receiver, the hardware elements including a processor.

Example 12 is the non-transitory computer-readable medium of example(s) 11, wherein the operations further comprise: while operating in accordance with the signal selection mode, selecting each satellite signal from the set of satellite signals not in the set of active signals to be included in a set of inactive signals that are not to be tracked by the GNSS receiver; and configuring the hardware elements to not track the set of inactive signals.

Example 13 is the non-transitory computer-readable medium of example(s) 11, wherein the signal selection mode is a first signal selection mode, and wherein the operations further comprise: switching from the first signal selection mode to a second signal selection mode; while operating in accordance with the second signal selection mode, selecting one satellite signal per satellite in the subset of the set of satellite signals to be included in the set of active signals to be tracked by the GNSS receiver; and tracking each satellite signal in the set of active signals using hardware elements of the GNSS receiver.

Example 14 is the non-transitory computer-readable medium of example(s) 16, wherein the signal selection mode is a first signal selection mode, and wherein the operations further comprise: while operating in accordance with the second signal selection mode, selecting each satellite signal from the set of satellite signals not in the set of active signals to be included in a set of inactive signals that are not to be tracked by the GNSS receiver; and configuring the hardware elements to not track the set of inactive signals.

Example 15 is the non-transitory computer-readable medium of example(s) 11, wherein the signal selection mode is a first signal selection mode, and wherein the method further comprises: switching from the first signal selection mode to a second signal selection mode; while operating in accordance with the second signal selection mode, selecting one satellite signal per frequency band in the subset of the set of satellite signals to be included in the set of active signals to be tracked by the GNSS receiver; and tracking each satellite signal in the set of active signals using hardware elements of the GNSS receiver.

Example 16 is the non-transitory computer-readable medium of example(s) 16, wherein the signal selection mode is a first signal selection mode, and wherein the method further comprises: while operating in accordance with the second signal selection mode, selecting each satellite signal from the set of satellite signals not in the set of active signals to be included in a set of inactive signals that are not to be tracked by the GNSS receiver; and configuring the hardware elements to not track the set of inactive signals.

Example 17 is an apparatus comprising: a global navigation satellite system (GNSS) antenna for receiving a set of satellite signals, the set of satellite signals having been transmitted by a set of satellites, wherein each of the set of satellite signals (i) belongs to one of at least one GNSS constellation, (ii) operates within one of a set of frequency bands, and (iii) has one of a set of signal types; a correction antenna for receiving a correction signal from a base station, the correction signal including correction data for a subset of the set of satellite signals; and hardware elements including a processor, the hardware elements configured to: while operating in accordance with a signal selection mode, select the subset of the set of satellite signals to be included in a set of active signals to be tracked by the apparatus; and track each satellite signal in the set of active signals.

Example 18 is the apparatus of example(s) 17, wherein the hardware elements are further configured to: while operating in accordance with the signal selection mode, select each satellite signal from the set of satellite signals not in the set of active signals to be included in a set of inactive signals that are not to be tracked by the apparatus; and be configured to not track the set of inactive signals.

Example 19 is the apparatus of example(s) 17, wherein the signal selection mode is a first signal selection mode, and wherein the hardware elements are further configured to: switch from the first signal selection mode to a second signal selection mode; while operating in accordance with the second signal selection mode, select one satellite signal per satellite in the subset of the set of satellite signals to be included in the set of active signals to be tracked by the apparatus; and track each satellite signal in the set of active signals.

Example 20 is the apparatus of example(s) 19, wherein the signal selection mode is a first signal selection mode, and wherein the hardware elements are further configured to: while operating in accordance with the second signal selection mode, select each satellite signal from the set of satellite signals not in the set of active signals to be included in a set of inactive signals that are not to be tracked by the apparatus; and be configured to not track the set of inactive signals.

### BRIEF DESCRIPTION OF THE DRAWINGS

The accompanying drawings, which are included to provide a further understanding of the disclosure, are incorporated in and constitute a part of this specification, illustrate embodiments of the disclosure and together with the detailed description serve to explain the principles of the disclosure. No attempt is made to show structural details of the disclosure in more detail than may be necessary for a fundamental understanding of the disclosure and various ways in which it may be practiced.
FIG. 1 illustrates an example satellite navigation system in which a rover performs a signal selection process.
FIGS. 2A and 2B illustrate example automatic and manual switching between signal selection modes.
FIGS. 3A-3D illustrate different example signal selection modes of a rover in a satellite navigation system.
FIGS. 4A and 4B illustrate example priority lists that may be used to select satellite signals while operating in a particular signal selection mode.
FIGS. 5A-5D illustrate an example trilateration technique performed by a GNSS receiver operating within a GNSS to generate a position estimate.
FIG. 6 illustrates an example of a rover, a mobile base station, and a stationary base station operating within a GNSS.
FIG. 7 illustrates an example block diagram of a GNSS receiver.
FIG. 8 illustrates an example block diagram of a GNSS receiver implemented as a multi-channel GNSS receiver.
FIG. 9 illustrates a method of selecting satellite signals for tracking at a GNSS receiver.
FIG. 10 illustrates an example computer system comprising various hardware elements.

### DETAILED DESCRIPTION OF THE INVENTION

The increased number of global navigation satellite system (GNSS) satellites has improved the accuracy, availability, and reliability of positioning, navigation, and timing services. Currently, the largest GNSS constellations each include between 20 and 50 operational satellites. At any given time, a GNSS receiver in an open-sky environment may have visibility to between 30 and 40 satellites or more, compared to the 8 to 12 satellites in the early days of the Global Positioning System (GPS). The number of visible satellites is even higher in Asia where BeiDou geosynchronous orbit (GEO) and inclined geosynchronous orbit (IGSO) satellites as well as Quasi-Zenith Satellite System (QZSS) and Navigation with Indian Constellation (NavIC) satellite are concentrated.

However, this increase has also led to a corresponding rise in central processing unit (CPU) utilization in GNSS receivers, particularly by the tracking software. In many cases, a GNSS receiver may track each satellite signal that it receives through its antenna, regardless of which constellation the satellite signal belongs. Tracking may include continuously monitoring the signals to extract GNSS observables such as pseudorange observables and carrier phase observables from the signals. This is computationally intensive because each satellite signal must be tracked independently, and tracking can involve computationally intensive tasks such as correlating the received signal with locally generated replicas of the satellite's pseudorandom noise (PRN) code and carrier signal, demodulating the satellite's navigation data (e.g., ephemeris), and performing any interference and multipath software routines. To track multiple satellite signals simultaneously, the receiver performs parallel signal processing, increasing the computational load. Further compounding the issue is that many satellites transmit signals on multiple frequency bands (e.g., L1, L2, L5 for GPS; E1, E5 for Galileo), each of which can be independently tracked.

This increase in CPU utilization has hardware and software implications. Many older GNSS receivers have limited processing power and struggle to track a large number of satellites, leading to dropped signals or reduced performance. Modern receivers may have more powerful CPUs or dedicated hardware (e.g., FPGAs, ASICs) to handle the increased computational load. Higher CPU utilization also increases power consumption, which is an important concern for battery-powered devices like portable GNSS receivers. Software algorithms need to be improved to manage the increased data volume efficiently so that both older and newer systems can continue to operate in a high-accuracy mode.

Embodiments of the present disclosure relate to an improved satellite signal selection process performed at a GNSS receiver to reduce CPU utilization while maintaining high positioning accuracy. Some embodiments examine the corrections transmitted by a nearby base station to make a decision with regards to which satellite signals are selected for active tracking and which signals are placed in an inactive list to not be tracked. Embodiments are particularly suitable for systems that use real-time kinematic (RTK) and precise point positioning (PPP) positioning engines, which can rely on receiving correction data from base stations. Embodiments provide intelligent load management by detecting and mitigating CPU loading issues by dynamically adjusting satellite tracking. For instance, signals with minimal contribution to RTK/PPP performance can be deprioritized or excluded.

In the following description, various examples will be described. For purposes of explanation, specific configurations and details are set forth in order to provide a thorough understanding of the examples. However, it will also be apparent to one skilled in the art that the example may be practiced without the specific details. Furthermore, well-known features may be omitted or simplified in order not to obscure the embodiments being described.

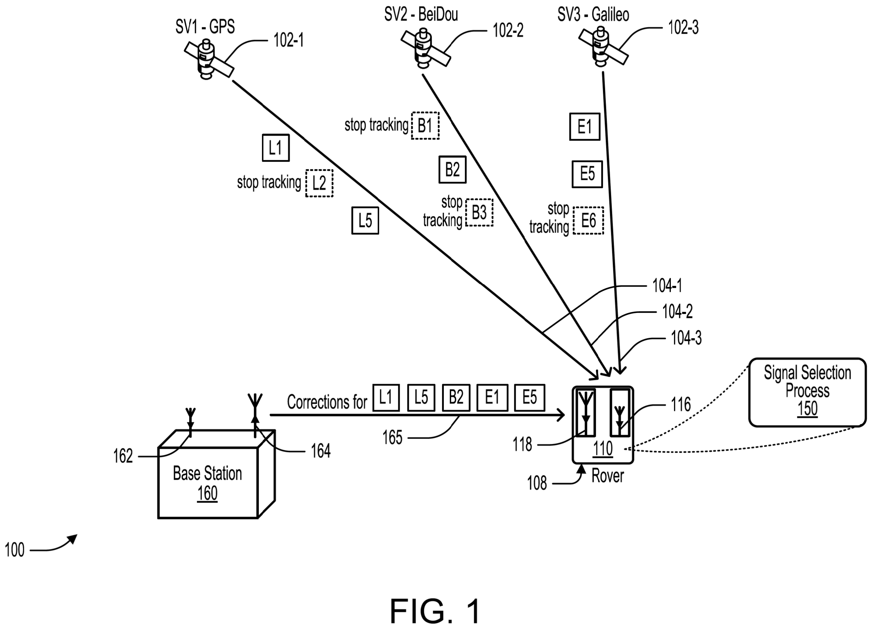

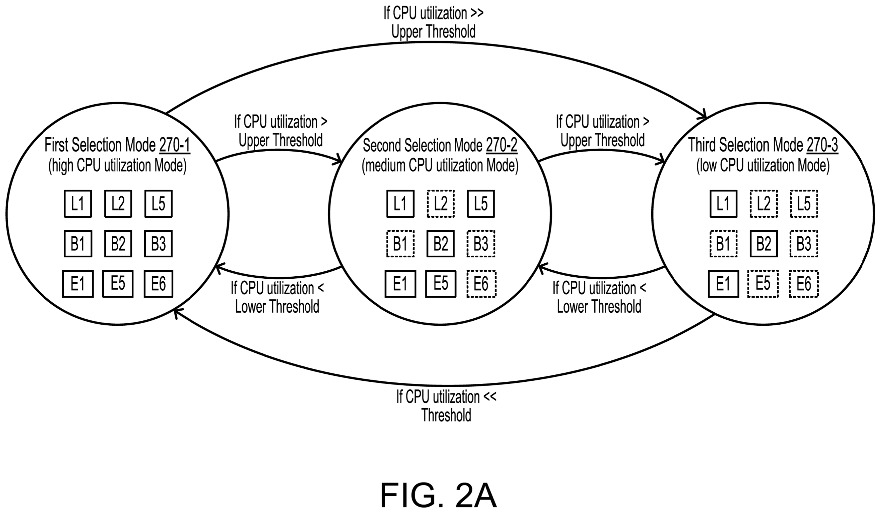

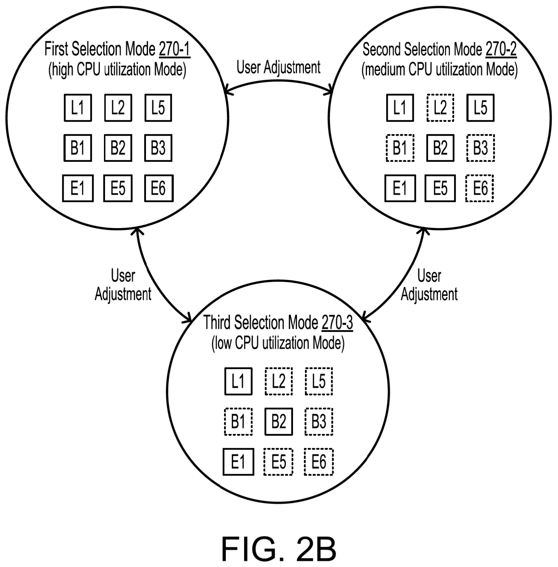

The figures herein follow a numbering convention in which the first digit or digits correspond to the figure number and the remaining digits identify an element or component in the figure. Similar elements or components between different figures may be identified by the use of similar digits. For example, 108 may reference element "08" in FIG. 1, and a similar element may be referenced as 208 in FIG. 2. As will be appreciated, elements shown in the various embodiments herein can be added, exchanged, and eliminated so as to provide a number of additional embodiments of the present disclosure. In addition, the proportion and the relative scale of the elements provided in the figures are intended to illustrate certain embodiments of the present disclosure and should not be taken in a limiting sense.

**FIG. 1** illustrates an example satellite navigation system 100 in which a rover 108 performs a signal selection process 150 to compute its estimated position, in accordance with some embodiments of the present disclosure. Rover 108 includes a GNSS receiver 110 having a GNSS antenna 116 for receiving satellite signals 104 from a set of GNSS satellites 102 and a correction antenna 118 for receiving a correction signal 165 from a base station 160. Satellite signals 104 transmitted by satellites 102 may operate within various frequency bands and may have various signal types. In the illustrated example, a first GNSS satellite 102-1 transmits first satellite signals 104-1 that include a signal operating within the GPS L1 frequency band (and having a particular signal type, e.g., GPS L1 C/A), a signal operating within the GPS L2 frequency band (and having a particular signal type, e.g., GPS L2C), and a signal operating within the GPS L5 frequency band (and having a particular signal type, e.g., GPS L5). Satellite signals 104-1 may be transmitted concurrently by GNSS satellite 102-1 and received concurrently by GNSS receiver 110. In some examples, satellite signals 104-1 may be considered to be a single signal having multiple sub-signals or multiple signal components.

Similarly, a second GNSS satellite 102-2 transmits second satellite signals 104-2 that include a signal operating within the BeiDou B1 frequency band, a signal operating within the BeiDou B2 frequency band, and a signal operating within the BeiDou B3 frequency band. A third GNSS satellite 102-3 transmits third satellite signals 104-3 that include a signal operating within the Galileo E1 frequency band, a signal operating within the Galileo E5 frequency band, and a signal operating within the Galileo E6 frequency band. Similar to satellite signals 104-1, each of satellite signals 104-2 and 104-3 may have a particular signal type (e.g., BeiDou B1C, BeiDou B2B, Galileo E5A, etc.) and, in some examples, each of satellite signals 104-2 and 104-3 may be considered to be a single signal having multiple sub-signals or multiple signal components. Accordingly, GNSS receiver 110 may receive satellite signals 104 belonging to different GNSS constellations and having a wide range of frequency bands and signal types.

Correction signal 165 may be transmitted by a correction antenna 164 of base station 160 to correction antenna 118 of GNSS receiver 110. Correction signal 165 may include corrections (or "correction data") to improve the accuracy of the estimated position that is computed by GNSS receiver 110 based on satellite signals 104. When using RTK techniques, the corrections may include reference carrier phase measurements made using a GNSS antenna 162 of base station 160. In some examples, the corrections may include the known position of base station 160. Correction signal 165 may include corrections for all of satellite signals 104 or, in some examples, corrections may only be included for a subset of satellite signals 104. In the illustrated example, correction signal 165 includes corrections for signal types that operate within the GPS L1, GPS L5, BeiDou B2, Galileo E1, and Galileo E5 frequency bands. Corrections are not included for signal types that operate within the GPS L2, BeiDou B1, BeiDou B3, and Galileo E6 frequency bands, however these satellite signals are still received by GNSS receiver 110 from GNSS satellites 102.

Upon receiving correction signal 165 and satellite signals 104, GNSS receiver 110 may perform signal selection process 150 to determine which of satellite signals 104 to actively track and which to not track. Signal selection process 150 may include one or more signal selection modes that GNSS receiver 110 may select and operate within. GNSS receiver 110 may start with a first signal selection mode and then switch to a second signal selection mode or remain with the first signal selection mode. In the illustrated example, the selected signal selection mode causes GNSS receiver to select each satellite signal for which a correction has been received or is being received to be actively tracked and each satellite signal for which no correction has been received or is not being received to not be actively tracked. As such, GNSS receiver 110 tracks satellite signals that operate within the GPS L1, GPS L5, BeiDou B2, Galileo E1, and Galileo E5 frequency bands and does not track satellite signals that operate within the GPS L2, BeiDou B1, BeiDou B3, and Galileo E6 frequency bands.

**FIGS. 2A** and **2B** illustrate example automatic and manual switching between signal selection modes 270, in accordance with some embodiments of the present disclosure. A first signal selection mode 270-1 may be a high CPU utilization mode and may include tracking all received satellite signals that are supported by the GNSS receiver. A second signal selection mode 270-2 may be a medium CPU utilization mode and may include tracking only the satellite signals for which corrections are received from the base station and that are supported by the GNSS receiver. A third signal selection mode 270-3 may be a low CPU utilization mode and may include tracking only the satellite signals for which corrections are received from the base station, that are supported by the GNSS receiver, and with a maximum of one satellite signal per satellite (or, in some examples, a maximum of one satellite signal per frequency band). The modifiers "high", "medium", and "low" in this context are used to convey that the utilization level of the processor(s) of the GNSS receiver is greater when operating in first signal selection mode 270-1 than when operating in second signal selection mode 270-2, and that the utilization level of the processor(s) of the GNSS receiver is greater when operating in second signal selection mode 270-2 than when operating in third signal selection mode 270-3.

FIG. 2A shows an example of automatic switching between signal selection modes 270 based on a utilization level of a processor of the GNSS receiver. While operating in first signal selection mode 270-1 at a first time, the GNSS receiver may determine a current utilization level of the processor and compare the utilization level to an upper threshold. If the utilization level is greater than the upper threshold, the signal selection mode is switched from first signal selection mode 270-1 to second signal selection mode 270-2. If the utilization level is not greater than the upper threshold, the signal selection mode remains in first signal selection mode 270-1. In some examples, if the utilization level is much greater than the upper threshold (for example, the utilization level is greater than a second upper threshold that is greater than the upper threshold), the signal selection mode is switched from first signal selection mode 270-1 to third signal selection mode 270-3.

While operating in the second signal selection mode 270-2 at a second time after the first time, the GNSS receiver may determine a current utilization level of the processor and compare the utilization level to the upper threshold and the lower threshold. If the utilization level is greater than the upper threshold, the signal selection mode is switched from second signal selection mode 270-2 to third signal selection mode 270-3. If the utilization level is less than a lower threshold, the signal selection mode is switched from second signal selection mode 270-2 to first signal selection mode 270-1. If the utilization level is neither greater than the upper threshold nor less than the lower threshold, the signal selection mode remains in second signal selection mode 270-2.

While operating in third signal selection mode 270-3 at a third time after the second time, the GNSS receiver may determine a current utilization level of the processor and compare the utilization level to the lower threshold. If the utilization level is less than the lower threshold, the signal selection mode is switched from third signal selection mode 270-3 to second signal selection mode 270-2. If the utilization level is not less than the lower threshold, the signal selection mode remains in third signal selection mode 270-3. In some examples, if the utilization level is much less than the lower threshold (for example, the utilization level is less than a second lower threshold that is less than the lower threshold), the signal selection mode is switched from third signal selection mode 270-3 to first signal selection mode 270-1.

FIG. 2B shows an example of manual switching between signal selection modes 270 based on a user-initiated request. While operating in first signal selection mode 270-1 at a first time, the user may request to switch to either second signal selection mode 270-2 or third signal selection mode 270-3. Similarly, while operating in second signal selection mode 270-2 at a second time after the first time, the user may request to switch to either first signal selection mode 270-1 or third signal selection mode 270-3, and while operating in third signal selection mode 270-3 at a third time after the second time, the user may request to switch to either first signal selection mode 270-1 or second signal selection mode 270-2. It is to be understood that manual switching and automatic switching may both be used concurrently or, in some examples, the user may toggle between manual switching and automatic switching. Furthermore, the user may adjust the thresholds associated with automatic switching to achieve certain performance metrics or certain CPU utilization levels.

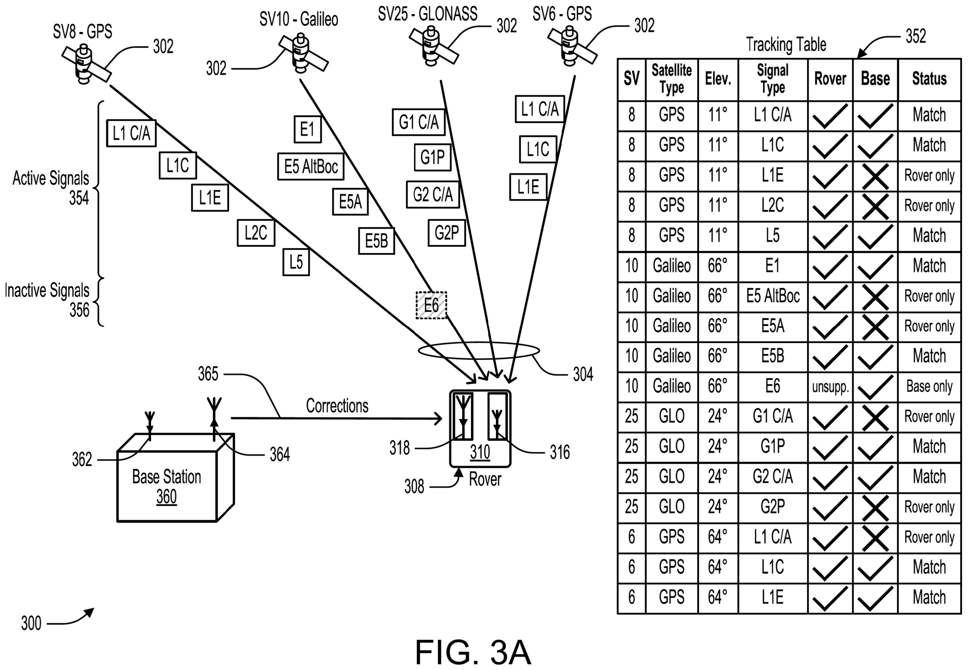

**FIGS. 3A-3D** illustrate different example signal selection modes of a rover 308 and a GNSS receiver 310 in a satellite navigation system 300, in accordance with some embodiments of the present disclosure. GNSS receiver 310 includes a GNSS antenna 316 for receiving satellite signals 304 from a set of GNSS satellites 302 and a correction antenna 318 for receiving a correction signal 365 from a base station 360. Correction signal 365 may be transmitted by a correction antenna 364 of base station 360 and may include corrections (or "correction data") that are used by GNSS receiver 310 to improve the accuracy of the estimated position that is computed by GNSS receiver 310 based on satellite signals 304. When using RTK techniques, the corrections may include reference carrier phase measurements made using a GNSS antenna 362 of base station 360.

GNSS receiver 310 may locally store, maintain, and update a tracking table 352 that lists information about satellite signals 304 received by GNSS receiver 310 and/or base station 360. For example, tracking table 352 may list, for each received satellite signal, an identifier (e.g., an SV) for the satellite that transmitted the satellite signal, a satellite type (e.g., a constellation) for the satellite that transmitted the satellite signal, an elevation angle with respect to GNSS receiver for the satellite that transmitted the satellite signal, a frequency band and/or a signal type for the satellite signal, an indication of whether GNSS receiver 310 is currently tracking the satellite signal, an indication of whether corrections for the satellite signal were received from base station 360 via correction signal 365, and a tracking status for the satellite signal. The tracking status may indicate whether both the rover and the base station are tracking the satellite signal ("Match"), whether the rover but not the base station is tracking the satellite signal ("Rover only"), whether the base station but not the rover is tracking the satellite signal ("Base only"), whether neither are tracking the satellite signal, or whether the satellite signal is unsupported by the rover. In the illustrated example, Galileo E6 satellite signals are unsupported by GNSS receiver 310.

FIG. 3A shows GNSS receiver 310 operating in accordance with a first signal selection mode in which GNSS receiver 310 tracks all received satellite signals 304 that are supported by GNSS receiver 310. GNSS receiver 310 selects satellite signals GPS L1 C/A, GPS L1C, GPS L1E, GPS L2C, GPS L5, Galileo E1, Galileo E5 AltBoc, Galileo E5A, Galileo E5B, GLONASS G1 C/A, GLONASS G1P, GLONASS G2 C/A, and GLONASS G2P to be included in a set of active signals 354 that are to be tracked by GNSS receiver 310 and satellite signal Galileo E6 to be included in a set of inactive signals 356 that are not to be tracked by GNSS receiver 310. Upon making these selections, GNSS receive 310 configures its hardware elements (including a processor) to track active signals 354 and to not track inactive signals 356. Thus, despite not receiving corrections for several satellite signals (as indicated by the "Base" column in tracking table 352), GNSS receiver 310 is tracking those signals in the first signal selection mode.

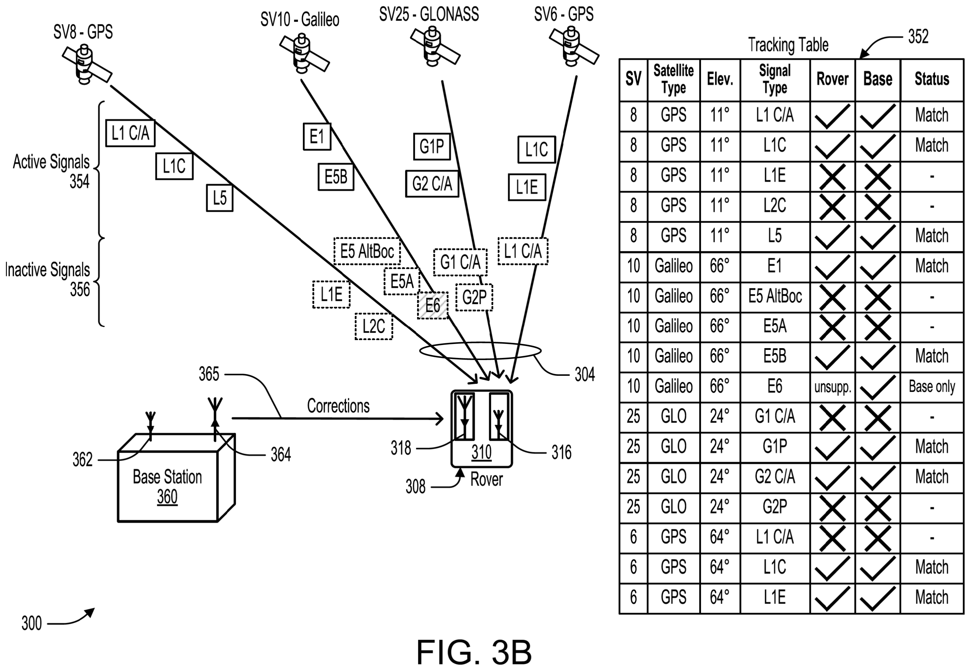

FIG. 3B shows GNSS receiver 310 operating in accordance with a second signal selection mode in which GNSS receiver 310 tracks only satellite signals 304 for which corrections are received from base station 360 and that are supported by GNSS receiver 310. GNSS receiver 310 selects satellite signals GPS L1 C/A, GPS L1C, GPS L5, Galileo E1, Galileo E5B, GLONASS G1P, GLONASS G2 C/A, and GPS L1E (for SV6) to be included in active signals 354 that are to be tracked by GNSS receiver 310 and satellite signals GPS L1E (for SV8), GPS L2C, Galileo E5 AltBoc, Galileo E5A, Galileo E6, GLONASS G1 C/A, and GLONASS G2P to be included in inactive signals 356 that are not to be tracked by GNSS receiver 310. Upon making these selections, GNSS receiver 310 configures its hardware elements to track active signals 354 and to not track inactive signals 356. Compared to the first signal selection mode, in the second signal selection mode GNSS receiver 310 has stopped tracking several satellite signals and accordingly has decreased the utilization level of its processor.

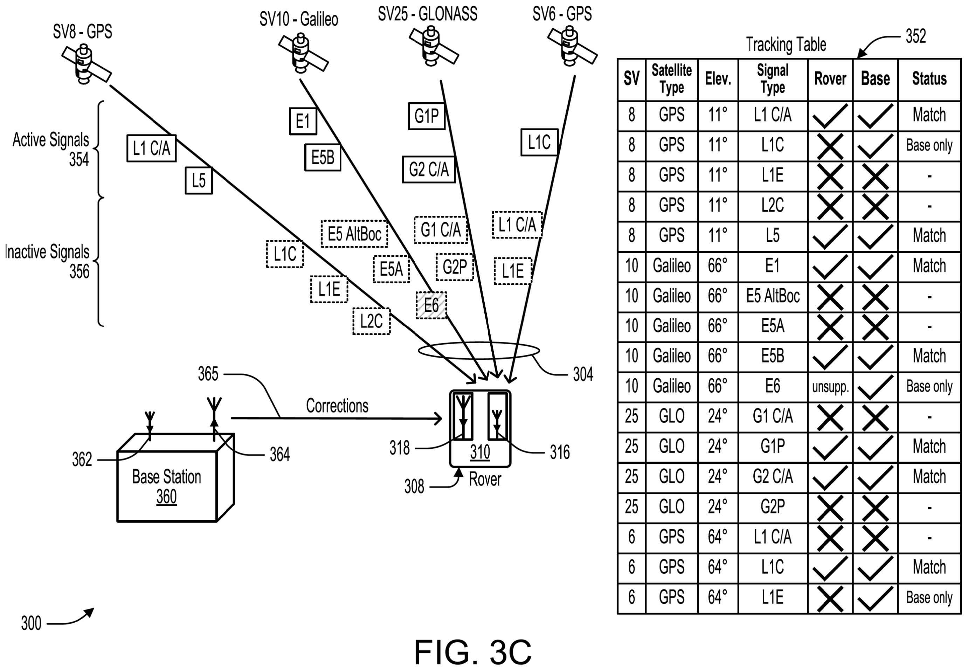

FIG. 3C shows GNSS receiver 310 operating in accordance with a third signal selection mode in which GNSS receiver 310 tracks a maximum of one satellite signal per frequency band of the satellite signals for which corrections are received from base station 360 and that are supported by GNSS receiver 310. To decide which one satellite signal per frequency band to track, GNSS receiver 310 may query a priority list that indicates a priority level for each satellite signal. The priority list may indicate that, for example, GPS L1 C/A signals (followed by GPS L1C signals) have the highest priority of signals operating within the GPS L1 frequency band, Galileo E5 AltBoc signals (followed by Galileo E5A signals) have the highest priority of signals operating within the Galileo E5 frequency band, and GLONASS G1 C/A signals (followed by GLONASS G1P signals) have the highest priority of signals operating within the GLONASS G1 frequency band.

Accordingly, GNSS receiver 310 selects satellite signal GPS L1 C/A, GPS L5, Galileo E1, Galileo E5B, GLONASS G1P, GLONASS G2 C/A, and GPS L1C (for SV6) to be included in active signals 354 that are to be tracked by GNSS receiver 310 and satellite signals GPS L1C (for SV8), GPS L1E, GPS L2C, Galileo E5 AltBoc, Galileo E5A, Galileo E6, GLONASS G1 C/A, and GLONASS G2P to be included in inactive signals 356 that are not to be tracked by GNSS receiver 310. It is noted that Galileo E5 AltBoc signals have a higher priority than Galileo E5B signals but corrections were not received for Galileo E5 AltBoc signals. Upon making these selections, GNSS receiver 310 configures its hardware elements to track active signals 354 and to not track inactive signals 356. Compared to the second signal selection mode, in the third signal selection mode GNSS receiver 310 has stopped tracking several satellite signals and accordingly has decreased the utilization level of its processor.

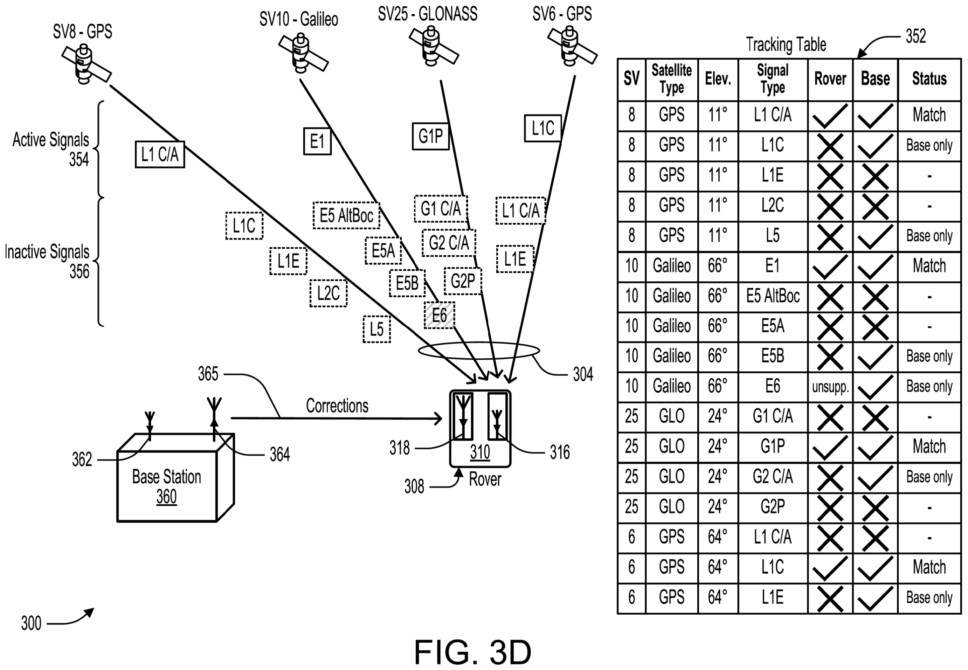

FIG. 3D shows GNSS receiver 310 operating in accordance with a fourth signal selection mode in which GNSS receiver 310 tracks a maximum of one satellite signal per satellite of the satellite signals for which corrections are received from base station 360 and that are supported by GNSS receiver 310. To decide which one satellite signal per satellite to track, GNSS receiver 310 may query a priority list that indicates a priority level for each satellite signal. The priority list may indicate that, for example, GPS L1 C/A signals have the highest priority of signals transmitted by GPS satellites, Galileo E1 signals have the highest priority of signals transmitted by Galileo satellites, and GLONASS G1 C/A signals (followed by GLONASS G1P signals) have the highest priority of signals transmitted by GLONASS satellites.

Accordingly, GNSS receiver 310 selects satellite signal GPS L1 C/A, Galileo E1, GLONASS G1P, and GPS L1C (for SV6) to be included in active signals 354 that are to be tracked by GNSS receiver 310 and satellite signals GPS L1C (for SV8), GPS L1E, GPS L2C, GPS L5, Galileo E5 AltBoc, Galileo E5A, Galileo E5B, Galileo E6, GLONASS G1 C/A, GLONASS G2 C/A, and GLONASS G2P to be included in inactive signals 356 that are not to be tracked by GNSS receiver 310. It is noted that GLONASS G1 C/A signals have a higher priority than GLONASS G1P signals but corrections were not received for GLONASS G1 C/A signals. Upon making these selections, GNSS receiver 310 configures its hardware elements to track active signals 354 and to not track inactive signals 356. Compared to the third signal selection mode, in the fourth signal selection mode GNSS receiver 310 has stopped tracking several satellite signals and accordingly has decreased the utilization level of its processor.

In some examples, GNSS receiver 310 may operate in accordance with a fifth signal selection mode in which GNSS receiver 310 tracks a maximum of one satellite signal per satellite type of the satellite signals for which corrections are received from base station 360 and that are supported by GNSS receiver 310. This fifth signal selection mode would differ from the fourth signal selection mode shown in FIG. 3D in that only one of the GPS signals (either GPS L1 C/A for SV8 or GPS L1C for SV6) would be tracked while the other would be added to inactive signals 356, such that only one signal would be tracked for all GPS satellites.

Other signal selection modes that reduce or increase the number of signals being tracked are contemplated and are considered within the scope of the present disclosure. For example, various combinations of logical operators may be used in conjunction with the signal selection modes. In one example, a signal selection mode may employ OR operators between different signals, such as a signal selection mode in which GPS L2C OR GPS L2E are selected to be in active signals 354, and GLONASS G2C OR GLONASS G2P are selected to be in active signals 354. In another example, a signal selection mode may employ AND operators between different signals, such as a signal selection mode in which GPS L2C AND GPS L2E are selected to be in active signals 354, and GLONASS G2C AND GLONASS G2P are selected to be in active signals 354. These signal selection modes may optionally employ the rule that only signals for which corrections are received from base station 360 may be followed. Thus, if base station 360 tracking GPS L2C but not GPS L2E and is transmitting only GPS L2C corrections, GNSS receiver 310 may only track GPS L2C despite the AND operator.

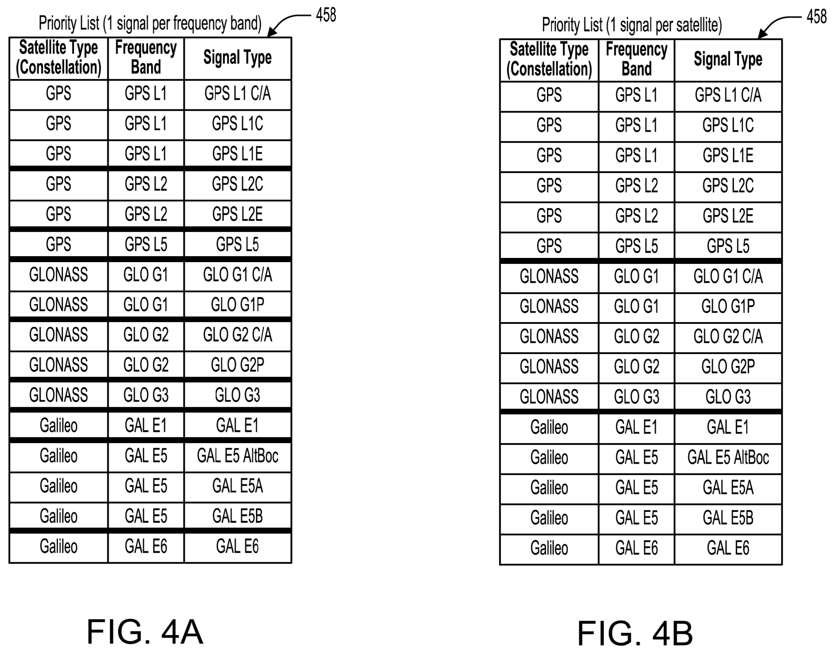

**FIGS. 4A** and **4B** illustrate example priority lists 458 that may be used to select satellite signals while operating in a particular signal selection mode, in accordance with some embodiments of the present disclosure. In FIG. 4A, priority list 458 indicates priorities between satellite signals within different frequency bands, and may therefore be used when selecting a single satellite signal per frequency band. In FIG. 4B, priority list 458 indicates priorities between satellite signals within different constellations, and may therefore be used when selecting a single satellite signal per satellite. These logical operators may be overridden ???

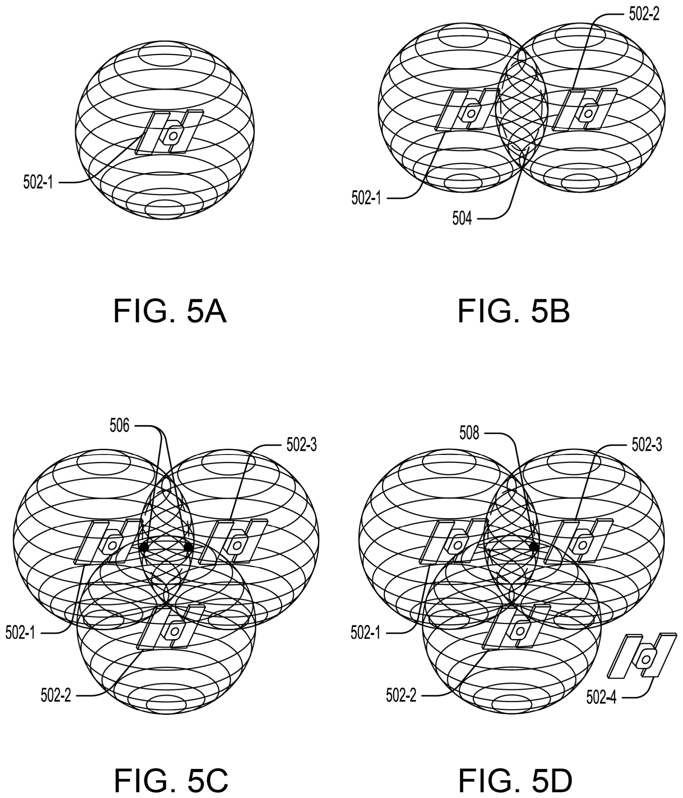

**FIGS. 5A-5D** illustrate an example trilateration technique performed by a GNSS receiver operating within a GNSS to generate a position estimate, in accordance with some embodiments of the present disclosure. FIG. 5A shows a first scenario in which a GNSS receiver receives satellite signals from a first satellite 502-1 and generates a distance estimate (e.g., 20,200 km) for that satellite. This informs the GNSS receiver that it is located somewhere on the surface of a sphere with a radius of 20,200 km, centered on first satellite 502-1. FIG. 5B shows a second scenario in which the GNSS receiver receives satellite signals from a second satellite 502-2 and generates a distance estimate (e.g., 23,000 km) for the additional satellite. This informs the GNSS receiver that it is also located somewhere on the surface of a sphere with a radius of 23,000 km, centered on second satellite 502-2. This limits the possible locations to somewhere on the region 504 where the first sphere and second sphere intersect.

FIG. 5C shows a third scenario in which the GNSS receiver receives satellite signals from a third satellite 502-3 and generates a distance estimate (e.g., 25,800 km) for the additional satellite. This informs the GNSS receiver that it is also located somewhere on the surface of a sphere with a radius of 25,800 km, centered on third satellite 502-3. This limits the possible locations to two points 506 where the first sphere, second sphere, and third sphere intersect. FIG. 5D shows a fourth scenario in which the GNSS receiver receives satellite signals from a fourth satellite 502-4. Fourth satellite 502-4 can be used to resolve which of points 506 is a correct point 508 (by generating a fourth sphere) and/or to synchronize the receiver's clock with the satellites' time.

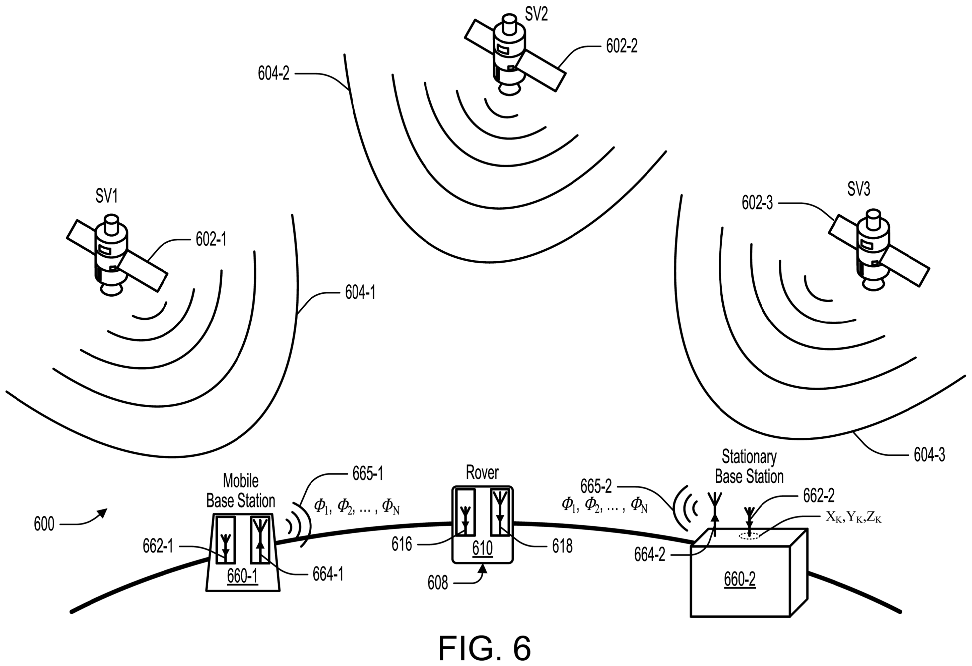

**FIG. 6** illustrates an example of a rover 608 (containing a GNSS receiver 610), a mobile base station 660-1, and a stationary base station 660-2 operating within a GNSS 600, in accordance with some embodiments of the present disclosure. GNSS 600 includes one or more GNSS satellites 602, i.e., space vehicles (SV), in orbit above rover 608 and base stations 660. GNSS satellites 602 may continuously, periodically, or intermittently broadcast satellite signals 604 containing PRN codes modulated onto carrier frequencies (e.g., L1 and L2 carrier frequencies). Satellite signals 604 may include ephemeris data that includes the satellite's current position and optionally the satellite's velocity. Furthermore, satellite signals 604 transmitted by different GNSS satellites 602 may include different PRN codes that identify the transmitting satellite such that receivers may associate different received signals to different GNSS satellites 602.

For example, GNSS satellite 602-1 may broadcast satellite signals 604-1 which contain a different PRN code and different ephemeris data than those contained in satellite signals 604-2 broadcasted by GNSS satellite 602-2. Similarly, GNSS satellite 602-3 may broadcast satellite signals 604-3 which contain a different PRN code and different ephemeris data than those contained in satellite signals 604-1 and 604-2 broadcasted by GNSS satellites 602-1 and 602-2, respectively. One or more of satellite signals 604 may be received by a GNSS antenna 616 of GNSS receiver 610. GNSS antenna 616 may be a patch antenna, a turnstile antenna, a helical antenna, a parabolic antenna, a phased-array antenna, a resistive plane antenna, a choke ring antenna, a radome antenna, among other possibilities.

Each of GNSS satellites 602 may belong to one or more of a variety of GNSS constellations, such as GPS, Galileo, GLONASS, and BeiDou, and may transmit wireless signals having one or more of a variety of signal types. For example, GNSS satellite 602-1 may be a GPS satellite and may transmit wireless signals having a GPS L1 C/A signal type (i.e., wireless signals having frequencies within the GPS L1 band and having been modulated using C/A code). GNSS satellite 602-1 may additionally or alternatively transmit wireless signals having a GPS L2C signal type (i.e., wireless signals having frequencies within the GPS L2 band and having been modulated using L2 civil codes). In some embodiments, GNSS satellite 602-1 may additionally be a Galileo satellite and may transmit wireless signals having a Galileo signal type (e.g., Galileo E1). Accordingly, a single satellite may include the ability to transmit wireless signals of a variety of signal types.

GNSS receiver 610 may use the pseudoranges between itself and GNSS satellites 602-1, 602-2, and 602-3 to generate a position estimate through trilateration as described in reference to FIGS. 5A-5D. For example, multiple spheres may be generated having center locations corresponding to the locations of GNSS satellites 602 and radii corresponding to the pseudoranges, with the intersection point(s) of the spheres used to determine the position estimate for GNSS receiver 610. The position estimate may be continuously, periodically, or intermittently updated by generating new pseudoranges and performing trilateration using the new pseudoranges. Subsequent position estimates may benefit from previous position estimates through filtering processes (e.g., Kalman filtering) capable of improving position estimate accuracy. Position estimates may also be determined using other techniques. In practice, a fourth satellite may be observed to estimate the receiver clock error with respect to the satellite system time.

Mobile base station 660-1 and stationary base station 660-2 may include GNSS antennas 662-1 and 662-2, respectively, where GNSS antenna 662-2 is positioned at a known position (e.g., X_{K},Y_{K},Z_{K}). Mobile base station 660-1 may be movable such that multiple mobile base stations 660-1 may be brought within or surrounding a project site so as to provide high-accuracy position estimates. Each of GNSS antennas 662 may be similar to GNSS antenna 616 and may be configured to receive one or more of satellite signals 604. For example, each of GNSS antennas 662 may be a patch antenna, a turnstile antenna, a helical antenna, a parabolic antenna, a phased-array antenna, a resistive plane antenna, a choke ring antenna, a radome antenna, among other possibilities.

One or both of base stations 660 may send a correction signal 665 containing correction data to GNSS receiver 610. The correction data is used by GNSS receiver 610 to improve the accuracy of its position estimate. In some examples, the correction data includes satellite orbit errors, clock errors, errors due to atmospheric effects (ionospheric and tropospheric delays), errors due to multipath effects, among other possibilities. In some examples, to generate this correction data, stationary base station 660-2 may compute a position estimate using signals received by GNSS antenna 662-2 and compare the position estimate to the known position. In some embodiments, the correction data includes any one of various types of raw or processed satellite data.

Correction signals 665 containing the correction data may be wirelessly transmitted by base stations 660 using correction antennas 664 and may be received by GNSS receiver 610 using a correction antenna 618. The correction signals 665 may be transmitted continuously, periodically, or intermittently by base stations 660. In some embodiments, correction signals 665 are transmitted over a set of wireless frequencies outside the GNSS frequencies (e.g., lower than the GNSS frequencies). In some embodiments, correction antennas 664 may be used for transmission only and correction antenna 618 may be used for reception only, although in some examples additional handshaking between GNSS receiver 610 and base stations 660 may occur.

In some examples, GNSS receiver 610 may use RTK techniques to estimate its position with centimeter-level accuracy by making carrier phase measurements of the received satellite signals 604. These carrier phase measurements, which may be referred to as "rover carrier phase measurements", may be analyzed along with carrier phase measurements at one or both of base stations 660, which may be referred to as "reference carrier phase measurements", to determine a vector (rover-to-base vector) between the position of rover 608 and the position(s) of base station(s) 660. This rover-to-base vector may be combined with the known positions of base stations 660 to estimate the position of rover 608. When using RTK techniques, the correction data may contain the reference carrier phase measurements, which may include a plurality of carrier phases *ϕ*₁ *,ϕ*₂ *,* ... , *ϕ*_{N}, where N is the number of GNSS signals. In some examples, the correction data may further include the known position (e.g., X_{K},Y_{K},Z_{K}) of base station 660-2.

In some examples, GNSS receiver 610 may generate certain measurements, referred to as "observables", based on satellite signals 604. These may include pseudorange observables *ρ*, which are the distances between the GNSS satellites 602 and GNSS receiver 610 each calculated by multiplying the speed of light by the time delay between when a signal is transmitted by the satellite and when it is received by GNSS receiver 610, and carrier phase observables *ϕ*, which are measurements of the phase difference between the received signal and a reference signal generated by GNSS receiver 610. Mathematically, range information from GNSS receiver 610 to the kth satellite can be derived from the pseudorange observable *ρ^{k}* and carrier phase observable *ϕ^{k}* from the kth satellite which, can be modeled as: ${ρ}^{k} = {r}^{k} + c \left(dT-{dt}^{k}\right) + {I}^{k} + {T}^{k} + {ε}_{ρ}^{k}$ (1) ${ϕ}^{k} = \frac{1}{λ} \left({r}^{k}+c\left(dT-{dt}^{k}\right)-{I}^{k}+{T}^{k}\right) + {N}^{k} + \frac{1}{λ} {ε}_{ϕ}^{k}$ (2) where *r^{k}* is the true range, *dT* is the receiver clock offset, *dt^{k}* is the satellite clock error, *I^{k}* is the ionosphere delay, *T^{k}* is the troposphere delay, *N^{k}* is the carrier phase integer ambiguity, *λ* is the carrier phase wavelength, ${ε}_{ρ}^{k}$ is the code multipath and noise, ${ε}_{ϕ}^{k}$ is the phase multipath and noise in the range domain, and *c* is the speed of light.

Let vector **x** = (*x, y, z*) and **x*^{k}*** = (*x^{k}, y^{k}, z^{k}*)*,* for *k =* 1, 2, ..., K, represent the position of GNSS receiver 610 at the time of the measurement and the position of the *k*th satellite at the time of signal transmission. The user-to-satellite light-of sight (LOS) range is: ${r}^{k} = \sqrt{{\left({x}^{k}-x\right)}^{2} + {\left({y}^{k}-y\right)}^{2} + {\left({z}^{k}-z\right)}^{2}} = \left‖{x}^{k}-x\right‖$ (3) Thus, it can be observed that pseudorange observables *ρ* and carrier phase observables *ϕ* can be used to estimate the position **x** if enough equations (determined by the number of satellites K) are available. In some cases, pseudorange observables *ρ* and carrier phase observables *ϕ* can be used collectively to estimate the position **x.** For example, pseudorange observables *ρ* can be first used to obtain an initial estimate for position **x** using K versions of equation (1). Next, the initial position estimate is used to resolve the integer ambiguity *N^{k}* of the carrier phase measurements. Finally, the resolved carrier phase measurements are used to compute a more accurate estimate for position **x** using K versions of equation (2).

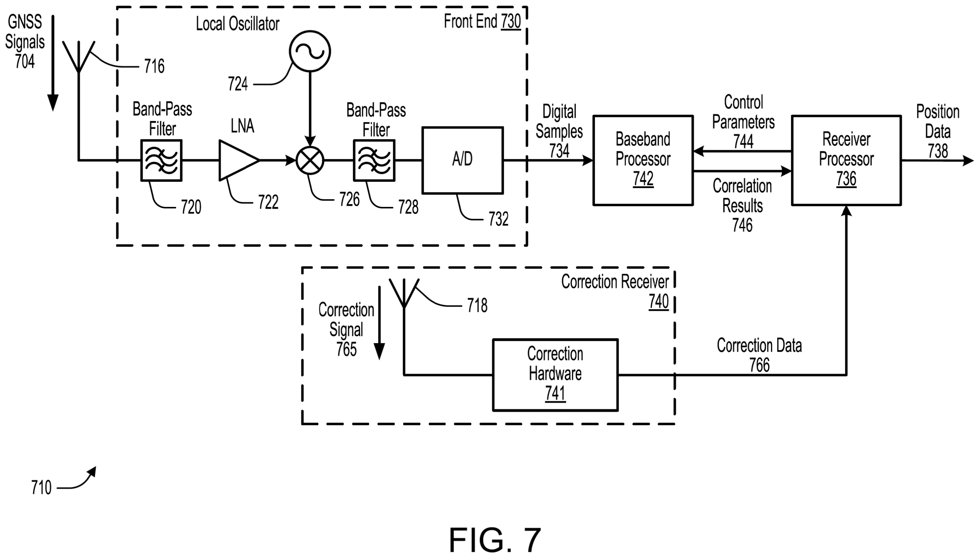

**FIG. 7** illustrates an example block diagram of a GNSS receiver 710, in accordance with some embodiments of the present disclosure. GNSS receiver 710 includes a GNSS antenna 716 for receiving satellite signals 704 and sending/routing satellite signals 704 to a radio frequency (RF) front end 730. RF front ends are well known in the art, and in some instances include a band-pass filter 720 for initially filtering out undesirable frequency components outside the frequencies of interest, a low-noise amplifier (LNA) 722 for amplifying the received signal, a local oscillator 724 and a mixer 726 for down converting the received signal from RF to intermediate frequencies (IF), a band-pass filter 728 for removing frequency components outside IF, and an analog-to-digital (A/D) converter 732 for sampling the received signal to generate digital samples 734.

In some instances, RF front end 730 includes additional or fewer components than that shown in FIG. 7. For example, RF front end 730 may include a second local oscillator (90 degrees out of phase with respect to the first), a second mixer, a second band-pass filter, and a second A/D converter for generating digital samples corresponding to the quadrature component of satellite signals 704. Digital samples corresponding to the in-phase component of satellite signals 704 and digital samples corresponding to the quadrature component of satellite signals 704 may both be sent to a baseband processor 742. In some embodiments, digital samples corresponding to both in-phase and quadrature components may be included in digital samples 734.

Other components within RF front end 730 may include a phase-locked loop (PLL) for synchronizing the phase of local oscillator 724 with the phase of the received signal, and a phase shifter for generating a second mixing signal using local oscillator 724 that is 90 degrees out of phase with local oscillator 724. In some embodiments, RF front end 730 does not include band-pass filter 720 and LNA 722. In some embodiments, A/D converter 732 is coupled directly to GNSS antenna 716 and samples the RF signal directly without downconversion to IF. In some embodiments, RF front end 730 only includes band-pass filter 720 and A/D converter 732. Other possible configurations of RF front end 730 are possible.

Digital samples 734 generated by RF front end 730 may be sent to a baseband processor 742, which may perform one or more correlations on digital samples 734 using local codes. Operation of baseband processor 742 may be controlled by control parameters 744 generated by a receiver processor 736. Baseband processor 742 may generate correlation results 746 based on digital samples 734 and control parameters 744 and send these results to receiver processor 736. In some embodiments, one or more operations performed by baseband processor 742 may alternatively be performed by receiver processor 736. In some embodiments, baseband processor 742 is a specific piece of hardware, such as an application-specific integrated circuit (ASIC) or a field-programmable gate array (FPGA). In some embodiments, operations performed by baseband processor 742 are performed entirely in software using digital signal processing (DSP) techniques. Based on correlation results 746 and/or digital samples 734, receiver processor 736 generates multiple GNSS observables (pseudorange observables and carrier phase observables).

Concurrently with this process, a correction receiver 740 may receive a correction signal 765 via a correction antenna 718, process correction signal 765 at a correction hardware 741 to extract correction data 766, and send correction data 766 to receiver processor 736. Based on the GNSS observables and correction data 766, receiver processor 736 may compute position estimates for GNSS receiver 710 and output the position estimates as position data 738. Each of the position estimates may be a 3D coordinate represented by three numbers. In some embodiments, the three numbers may correspond to latitude, longitude, and elevation/altitude. In other embodiments, the three numbers may correspond to X, Y, and Z positions. Position data 738 may be outputted to be displayed to a user, transmitted to a separate device (e.g., computer, smartphone, server, etc.) via a wired or wireless connection, or further processed, among other possibilities.

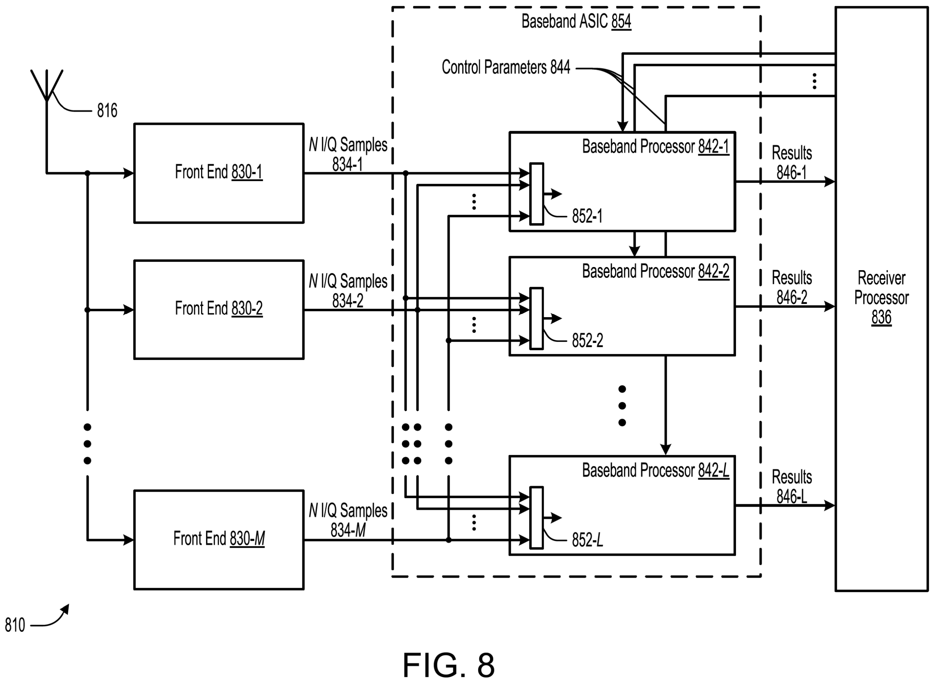

**FIG. 8** illustrates an example block diagram of a GNSS receiver 810 implemented as a multi-channel GNSS receiver, in accordance with some embodiments of the present disclosure. In the illustrated example, GNSS receiver 810 includes a GNSS antenna 816 and *M* front ends 830, each configured to generate and output *N* I/Q digital samples 834. GNSS receiver 810 may include L baseband processors 842, each configured to receive each of the sets of I/Q samples 834. Each of baseband processors 842 may include an input multiplexer 852 that selects one of the inputs based on control parameters 844. For example, control parameters 844 may cause input multiplexer 852-1 to select I/Q samples 834-1 and input multiplexer 852-2 to select I/Q samples 834-2. Each of baseband processors 842 may generate and output results 846 that are fed into receiver processor 836. In some examples, baseband processors 842 may be implemented on a baseband ASIC 854.

Each of front ends 830 and baseband processors 842 may be configured to process different frequencies and/or GNSS signal types. In one implementation, GNSS receiver 810 may be configured to process GPS L1/L2/L5, GLONASS L1/L2/L3, and BeiDou B1, B2 signals. In various embodiments, such signals may be processed sequentially, concurrently, or simultaneously. In some embodiments, each of front ends 830 may be configured to process a single GNSS signal type while each of baseband processors 842 may be configured to process any GNSS signal type. For example, in one implementation, front end 830-1 may be configured to process only GPS L1 signals and front end 830-2 may be configured to process only GPS L2 signals while each of baseband processors 842-1 and 842-2 may be configured to process both GPS L1 signals and GPS L2 signals. Other possibilities are contemplated.

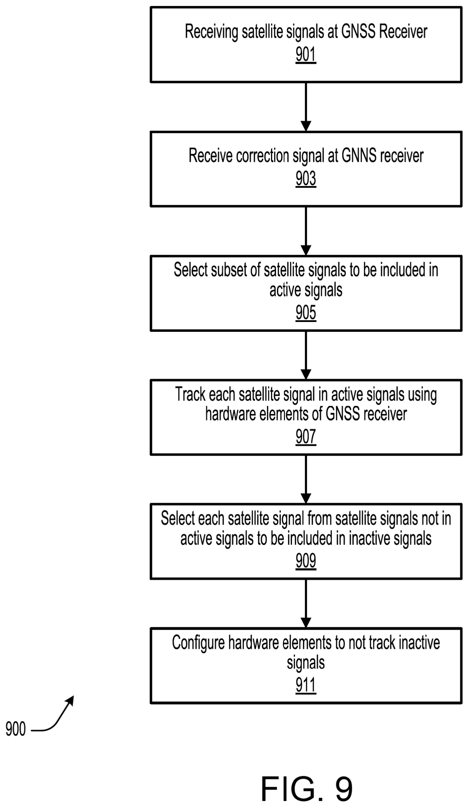

**FIG. 9** illustrates a method 900 of selecting satellite signals for tracking at a GNSS receiver, in accordance with some embodiments of the present disclosure. Steps of method 900 may be performed in any order and/or in parallel, and one or more steps of method 900 may be optionally performed. One or more steps of method 900 may be performed by one or more processors, such as those included in a GNSS receiver. Method 900 may be implemented as a computer-readable medium or computer program product comprising instructions which, when the program is executed by one or more processors, cause the one or more processors to carry out the steps of method 900.

At step 901, a set of satellite signals (e.g., satellite signals 104, 304, 604, 704) are received at a GNSS receiver (e.g., GNSS receivers 110, 310, 610, 701, 810). The set of satellite signals may have been transmitted by a set of satellites (e.g., GNSS satellites 102, 302, 502, 602). The set of satellite signals may be received via a GNSS antenna (e.g., GNSS antennas 116, 316, 616, 716, 816) of the GNSS receiver. Each of the set of satellite signals may belong to one of at least one GNSS constellation. Each of the set of satellite signals may operate within one of a set of frequency bands. Each of the set of satellite signals may have one of a set of signal types.

At step 903, a correction signal (e.g., corrections signals 165, 365, 665, 765) is received at the GNSS receiver from a base station (e.g., base stations 160, 360, 660). The correction signal may include correction data (e.g., correction data 766) for a subset of the set of satellite signals.

At step 905, the subset of the set of satellite signals are selected to be included in a set of active signals (e.g., active signals 354) to be tracked by the GNSS receiver. Step 903 may be performed while the GNSS receiver is operating in accordance with a signal selection mode (e.g., signal selection modes 270).

At step 907, each satellite signal in the set of active signals is tracked using hardware elements of the GNSS receiver. The hardware elements may include a processor and/or an RF front end (e.g., RF front ends 730, 830). The processor may be a baseband processor (e.g., baseband processors 742, 842) or a receiver processor (e.g., receiver processor 736, 836). Step 907 may be performed while the GNSS receiver is operating in accordance with the signal selection mode.

At step 909, each satellite signal from the set of satellite signals that is not in the set of active signals is selected to be included in a set of inactive signals (e.g., inactive signals 356) that are not to be tracked by the GNSS receiver. Step 909 may be performed while the GNSS receiver is operating in accordance with the signal selection mode.

At step 911, the hardware elements are configured to not track the set of inactive signals. Step 911 may be performed while the GNSS receiver is operating in accordance with the signal selection mode.

In some examples, method 900 may include switching from the signal selection mode, which may be a first signal selection mode, to a second signal selection mode. Method 900 may further include selecting one signal per satellite or one signal per frequency band in the subset of the set of satellite signals to be included in the set of active signals to be tracked by the GNSS receiver. Method 900 may include switching from the second signal selection mode to a third signal selection mode or back to the first signal selection mode.

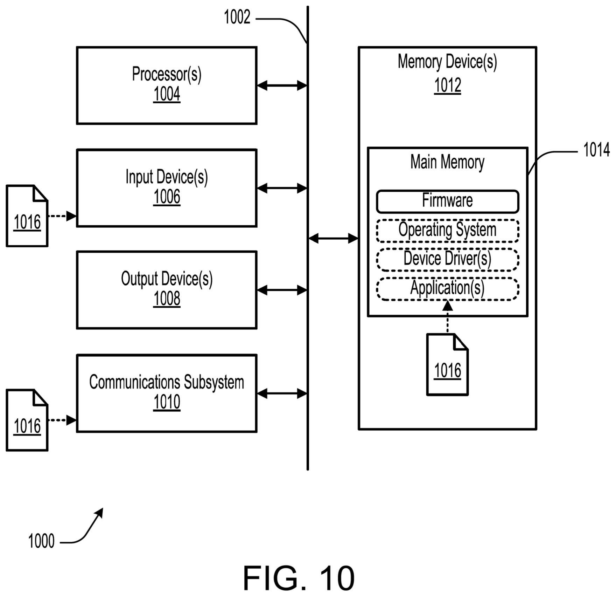

**FIG. 10** illustrates an example computer system 1000 comprising various hardware elements, in accordance with some embodiments of the present disclosure. Computer system 1000 may be incorporated into or integrated with devices described herein and/or may be configured to perform some or all of the steps of the methods provided by various embodiments. For example, in various embodiments, computer system 1000 may be incorporated into a GNSS receiver and/or may be configured to perform method 900. It should be noted that FIG. 10 is meant only to provide a generalized illustration of various components, any or all of which may be utilized as appropriate. FIG. 10, therefore, broadly illustrates how individual system elements may be implemented in a relatively separated or relatively more integrated manner.

In the illustrated example, computer system 1000 includes a communication medium 1002, one or more processor(s) 1004, one or more input device(s) 1006, one or more output device(s) 1008, a communications subsystem 1010, and one or more memory device(s) 1012. Computer system 1000 may be implemented using various hardware implementations and embedded system technologies. For example, one or more elements of computer system 1000 may be implemented within an integrated circuit (IC), an application-specific integrated circuit (ASIC), an application-specific standard product (ASSP), a field-programmable gate array (FPGA), such as those commercially available by XILINX^{®}, INTEL^{®}, or LATTICE SEMICONDUCTOR^{®}, a system-on-a-chip (SoC), a microcontroller, a printed circuit board (PCB), and/or a hybrid device, such as an SoC FPGA, among other possibilities.

The various hardware elements of computer system 1000 may be communicatively coupled via communication medium 1002. While communication medium 1002 is illustrated as a single connection for purposes of clarity, it should be understood that communication medium 1002 may include various numbers and types of communication media for transferring data between hardware elements. For example, communication medium 1002 may include one or more wires (e.g., conductive traces, paths, or leads on a PCB or integrated circuit (IC), microstrips, striplines, coaxial cables), one or more optical waveguides (e.g., optical fibers, strip waveguides), and/or one or more wireless connections or links (e.g., infrared wireless communication, radio communication, microwave wireless communication), among other possibilities.

In some embodiments, communication medium 1002 may include one or more buses that connect the pins of the hardware elements of computer system 1000. For example, communication medium 1002 may include a bus that connects processor(s) 1004 with main memory 1014, referred to as a system bus, and a bus that connects main memory 1014 with input device(s) 1006 or output device(s) 1008, referred to as an expansion bus. The system bus may itself consist of several buses, including an address bus, a data bus, and a control bus. The address bus may carry a memory address from processor(s) 1004 to the address bus circuitry associated with main memory 1014 in order for the data bus to access and carry the data contained at the memory address back to processor(s) 1004. The control bus may carry commands from processor(s) 1004 and return status signals from main memory 1014. Each bus may include multiple wires for carrying multiple bits of information and each bus may support serial or parallel transmission of data.

Processor(s) 1004 may include one or more central processing units (CPUs), graphics processing units (GPUs), neural network processors or accelerators, digital signal processors (DSPs), and/or other general-purpose or special-purpose processors capable of executing instructions. A CPU may take the form of a microprocessor, which may be fabricated on a single IC chip of metal-oxide-semiconductor field-effect transistor (MOSFET) construction. Processor(s) 1004 may include one or more multi-core processors, in which each core may read and execute program instructions concurrently with the other cores, increasing speed for programs that support multithreading.

Input device(s) 1006 may include one or more of various user input devices such as a mouse, a keyboard, a microphone, as well as various sensor input devices, such as an image capture device, a temperature sensor (e.g., thermometer, thermocouple, thermistor), a pressure sensor (e.g., barometer, tactile sensor), a movement sensor (e.g., accelerometer, gyroscope, tilt sensor), a light sensor (e.g., photodiode, photodetector, charge-coupled device), and/or the like. Input device(s) 1006 may also include devices for reading and/or receiving removable storage devices or other removable media. Such removable media may include optical discs (e.g., Blu-ray discs, DVDs, CDs), memory cards (e.g., CompactFlash card, Secure Digital (SD) card, Memory Stick), floppy disks, Universal Serial Bus (USB) flash drives, external hard disk drives (HDDs) or solid-state drives (SSDs), and/or the like.

Output device(s) 1008 may include one or more of various devices that convert information into human-readable form, such as without limitation a display device, a speaker, a printer, a haptic or tactile device, and/or the like. Output device(s) 1008 may also include devices for writing to removable storage devices or other removable media, such as those described in reference to input device(s) 1006. Output device(s) 1008 may also include various actuators for causing physical movement of one or more components. Such actuators may be hydraulic, pneumatic, electric, and may be controlled using control signals generated by computer system 1000.

Communications subsystem 1010 may include hardware components for connecting computer system 1000 to systems or devices that are located external to computer system 1000, such as over a computer network. In various embodiments, communications subsystem 1010 may include a wired communication device coupled to one or more input/output ports (e.g., a universal asynchronous receiver-transmitter (UART)), an optical communication device (e.g., an optical modem), an infrared communication device, a radio communication device (e.g., a wireless network interface controller, a BLUETOOTH^{®} device, an IEEE 802.11 device, a Wi-Fi device, a Wi-Max device, a cellular device), among other possibilities.

Memory device(s) 1012 may include the various data storage devices of computer system 1000. For example, memory device(s) 1012 may include various types of computer memory with various response times and capacities, from faster response times and lower capacity memory, such as processor registers and caches (e.g., L0, L1, L2), to medium response time and medium capacity memory, such as random-access memory (RAM), to lower response times and lower capacity memory, such as solid-state drives and hard drive disks. While processor(s) 1004 and memory device(s) 1012 are illustrated as being separate elements, it should be understood that processor(s) 1004 may include varying levels of on-processor memory, such as processor registers and caches that may be utilized by a single processor or shared between multiple processors.

Memory device(s) 1012 may include main memory 1014, which may be directly accessible by processor(s) 1004 via the address and data buses of communication medium 1002. For example, processor(s) 1004 may continuously read and execute instructions stored in main memory 1014. As such, various software elements may be loaded into main memory 1014 to be read and executed by processor(s) 1004 as illustrated in FIG. 10. Typically, main memory 1014 is volatile memory, which loses all data when power is turned off and accordingly needs power to preserve stored data. Main memory 1014 may further include a small portion of non-volatile memory containing software (e.g., firmware, such as BIOS) that is used for reading other software stored in memory device(s) 1012 into main memory 1014. In some embodiments, the volatile memory of main memory 1014 is implemented as RAM, such as dynamic random-access memory (DRAM), and the non-volatile memory of main memory 1014 is implemented as read-only memory (ROM), such as flash memory, erasable programmable read-only memory (EPROM), or electrically erasable programmable read-only memory (EEPROM).

Computer system 1000 may include software elements, shown as being currently located within main memory 1014, which may include an operating system, device driver(s), firmware, compilers, and/or other code, such as one or more application programs, which may include computer programs provided by various embodiments of the present disclosure. Merely by way of example, one or more steps described with respect to any methods discussed above, may be implemented as instructions 1016, which are executable by computer system 1000. In one example, such instructions 1016 may be received by computer system 1000 using communications subsystem 1010 (e.g., via a wireless or wired signal that carries instructions 1016), carried by communication medium 1002 to memory device(s) 1012, stored within memory device(s) 1012, read into main memory 1014, and executed by processor(s) 1004 to perform one or more steps of the described methods. In another example, instructions 1016 may be received by computer system 1000 using input device(s) 1006 (e.g., via a reader for removable media), carried by communication medium 1002 to memory device(s) 1012, stored within memory device(s) 1012, read into main memory 1014, and executed by processor(s) 1004 to perform one or more steps of the described methods.

In some embodiments of the present disclosure, instructions 1016 are stored on a computer-readable storage medium (or simply computer-readable medium). Such a computer-readable medium may be non-transitory and may therefore be referred to as a non-transitory computer-readable medium. In some cases, the non-transitory computer-readable medium may be incorporated within computer system 1000. For example, the non-transitory computer-readable medium may be one of memory device(s) 1012 (as shown in FIG. 10). In some cases, the non-transitory computer-readable medium may be separate from computer system 1000. In one example, the non-transitory computer-readable medium may be a removable medium provided to input device(s) 1006 (as shown in FIG. 10), such as those described in reference to input device(s) 1006, with instructions 1016 being read into computer system 1000 by input device(s) 1006. In another example, the non-transitory computer-readable medium may be a component of a remote electronic device, such as a mobile phone, that may wirelessly transmit a data signal that carries instructions 1016 to computer system 1000 and that is received by communications subsystem 1010 (as shown in FIG. 10).

Instructions 1016 may take any suitable form to be read and/or executed by computer system 1000. For example, instructions 1016 may be source code (written in a human-readable programming language such as Java, C, C++, C#, Python), object code, assembly language, machine code, microcode, executable code, and/or the like. In one example, instructions 1016 are provided to computer system 1000 in the form of source code, and a compiler is used to translate instructions 1016 from source code to machine code, which may then be read into main memory 1014 for execution by processor(s) 1004. As another example, instructions 1016 are provided to computer system 1000 in the form of an executable file with machine code that may immediately be read into main memory 1014 for execution by processor(s) 1004. In various examples, instructions 1016 may be provided to computer system 1000 in encrypted or unencrypted form, compressed or uncompressed form, as an installation package or an initialization for a broader software deployment, among other possibilities.

In one aspect of the present disclosure, a system (e.g., computer system 1000) is provided to perform methods in accordance with various embodiments of the present disclosure. For example, some embodiments may include a system comprising one or more processors (e.g., processor(s) 1004) that are communicatively coupled to a non-transitory computer-readable medium (e.g., memory device(s) 1012 or main memory 1014). The non-transitory computer-readable medium may have instructions (e.g., instructions 1016) stored therein that, when executed by the one or more processors, cause the one or more processors to perform the methods described in the various embodiments.

In another aspect of the present disclosure, a computer-program product that includes instructions (e.g., instructions 1016) is provided to perform methods in accordance with various embodiments of the present disclosure. The computer-program product may be tangibly embodied in a non-transitory computer-readable medium (e.g., memory device(s) 1012 or main memory 1014). The instructions may be configured to cause one or more processors (e.g., processor(s) 1004) to perform the methods described in the various embodiments.

In another aspect of the present disclosure, a non-transitory computer-readable medium (e.g., memory device(s) 1012 or main memory 1014) is provided. The non-transitory computer-readable medium may have instructions (e.g., instructions 1016) stored therein that, when executed by one or more processors (e.g., processor(s) 1004), cause the one or more processors to perform the methods described in the various embodiments.

The methods, systems, and devices discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of exemplary configurations including implementations. However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Having described several example configurations, various modifications, alternative constructions, and equivalents may be used without departing from the spirit of the disclosure. For example, the above elements may be components of a larger system, wherein other rules may take precedence over or otherwise modify the application of the technology. Also, a number of steps may be undertaken before, during, or after the above elements are considered. Accordingly, the above description does not bind the scope of the claims.

As used herein and in the appended claims, the singular forms "a", "an", and "the" include plural references unless the context clearly dictates otherwise. Thus, for example, reference to "a user" includes reference to one or more of such users, and reference to "a processor" includes reference to one or more processors and equivalents thereof known to those skilled in the art, and so forth.

Also, the words "comprise," "comprising," "contains," "containing," "include," "including," and "includes," when used in this specification and in the following claims, are intended to specify the presence of stated features, integers, components, or steps, but they do not preclude the presence or addition of one or more other features, integers, components, steps, acts, or groups.

It is also understood that the examples and embodiments described herein are for illustrative purposes only and that various modifications or changes in light thereof will be suggested to persons skilled in the art and are to be included within the spirit and purview of this application and scope of the appended claims.

## Claims

1. A method of comprising:
receiving a set of satellite signals at a global navigation satellite system (GNSS) receiver, the set of satellite signals having been transmitted by a set of satellites, the set of satellite signals being received via a GNSS antenna of the GNSS receiver, wherein each of the set of satellite signals (i) belongs to one of at least one GNSS constellation, (ii) operates within one of a set of frequency bands, and (iii) has one of a set of signal types;
receiving a correction signal at the GNSS receiver from a base station, the correction signal including correction data for a subset of the set of satellite signals;
while operating in accordance with a signal selection mode, selecting the subset of the set of satellite signals to be included in a set of active signals to be tracked by the GNSS receiver; and
tracking each satellite signal in the set of active signals using hardware elements of the GNSS receiver, the hardware elements including a processor.

2. The method of claim 1, further comprising:
while operating in accordance with the signal selection mode, selecting each satellite signal from the set of satellite signals not in the set of active signals to be included in a set of inactive signals that are not to be tracked by the GNSS receiver; and
configuring the hardware elements to not track the set of inactive signals.

3. The method of claim 1 or 2, wherein the at least one GNSS constellation includes at least one of Global Positioning System (GPS), Global Navigation Satellite System (GLONASS), BeiDou, Galileo, Quasi-Zenith Satellite System (QZSS), or Navigation with Indian Constellation (NavIC).

4. The method of claim 3, wherein the set of frequency bands include at least one of GPS L1, GPS L2, GPS L5, GLONASS G1, GLONASS G2, GLONASS G3, Galileo E1, Galileo E5, or Galileo E6.

5. The method of claim 4, wherein the set of signal types include at least one of GPS L1 C/A, GPS L1C, GPS L1E, GPS L2C, GPS L2E, GPS L5, GLONASS G1 C/A, GLONASS G1P, GLONASS G2 C/A, GLONASS G2P, GLONASS G3, Galileo E1, Galileo E5 AltBoc, Galileo E5A, Galileo E5B, or Galileo E6.

6. The method of any one of the preceding claims, wherein the signal selection mode is a first signal selection mode, and wherein the method further comprises:
switching from the first signal selection mode to a second signal selection mode;
while operating in accordance with the second signal selection mode, selecting one satellite signal per satellite in the subset of the set of satellite signals to be included in the set of active signals to be tracked by the GNSS receiver; and
tracking each satellite signal in the set of active signals using hardware elements of the GNSS receiver.

7. The method of claim 6, wherein the signal selection mode is a first signal selection mode, and wherein the method further comprises:
while operating in accordance with the second signal selection mode, selecting each satellite signal from the set of satellite signals not in the set of active signals to be included in a set of inactive signals that are not to be tracked by the GNSS receiver; and
configuring the hardware elements to not track the set of inactive signals.

8. The method of any one of claims 1-5, wherein the signal selection mode is a first signal selection mode, and wherein the method further comprises:
switching from the first signal selection mode to a second signal selection mode;
while operating in accordance with the second signal selection mode, selecting one satellite signal per frequency band in the subset of the set of satellite signals to be included in the set of active signals to be tracked by the GNSS receiver; and
tracking each satellite signal in the set of active signals using hardware elements of the GNSS receiver.

9. The method of any one of the preceding claims, wherein the signal selection mode is a first signal selection mode, and wherein the method further comprises:
determining a utilization level of the processor;
comparing the utilization level of the processor to a threshold; and
in response to determining that the utilization level of the processor is greater than the threshold, switching from the first signal selection mode to a second signal selection mode different from the first signal selection mode.

10. A non-transitory computer-readable medium comprising instructions that, when executed by one or more processors, cause the one or more processors to perform the method of any one of the preceding claims.

11. An apparatus comprising:
a global navigation satellite system (GNSS) antenna for receiving a set of satellite signals, the set of satellite signals having been transmitted by a set of satellites, wherein each of the set of satellite signals (i) belongs to one of at least one GNSS constellation, (ii) operates within one of a set of frequency bands, and (iii) has one of a set of signal types;
a correction antenna for receiving a correction signal from a base station, the correction signal including correction data for a subset of the set of satellite signals; and
hardware elements including a processor, the hardware elements configured to:
while operating in accordance with a signal selection mode, select the subset of the set of satellite signals to be included in a set of active signals to be tracked by the apparatus; and
track each satellite signal in the set of active signals.

12. The apparatus of claim 11, wherein the hardware elements are further configured to:
while operating in accordance with the signal selection mode, select each satellite signal from the set of satellite signals not in the set of active signals to be included in a set of inactive signals that are not to be tracked by the apparatus; and
be configured to not track the set of inactive signals.

13. The apparatus of claim 11 or 12, wherein the signal selection mode is a first signal selection mode, and wherein the hardware elements are further configured to:
switch from the first signal selection mode to a second signal selection mode;
while operating in accordance with the second signal selection mode, select one satellite signal per satellite in the subset of the set of satellite signals to be included in the set of active signals to be tracked by the apparatus; and
track each satellite signal in the set of active signals.

14. The apparatus of claim 13, wherein the signal selection mode is a first signal selection mode, and wherein the hardware elements are further configured to:
while operating in accordance with the second signal selection mode, select each satellite signal from the set of satellite signals not in the set of active signals to be included in a set of inactive signals that are not to be tracked by the apparatus; and
be configured to not track the set of inactive signals.

15. The apparatus of any one of claims 11-14, wherein the signal selection mode is a first signal selection mode, and wherein the operations further comprise:
determining a utilization level of the processor;
comparing the utilization level of the processor to a threshold; and
in response to determining that the utilization level of the processor is greater than the threshold, switching from the first signal selection mode to a second signal selection mode different from the first signal selection mode.
